Europäisches Patentamt

European Patent Office

Office européen des brevets

(19)

(11) Publication number: **0 513 918 A1**

## EUROPEAN PATENT APPLICATION

(12)

(21) Application number: **92201331.3**

(22) Date of filing: **11.05.92**

(51) Int. Cl.⁵: **G06F 15/20**

(30) Priority: **16.05.91 NL 9100849**

(43) Date of publication of application:
**19.11.92 Bulletin 92/47**

(84) Designated Contracting States:
**BE DE FR GB IT NL SE**

(71) Applicant: **Océ-Nederland B.V.**
**St. Urbanusweg 43**
**NL-5914 CC Venlo(NL)**

(72) Inventor: **Van Vliembergen, Eduardus**
**Josephus Willibrordus**
**La Fontainestraat 7**
**NL-5924 AX Venlo(NL)**
Inventor: **Cremers, Louis Marie Gerardus**
**Casinoweg 44**
**NL-5915 EM Venlo(NL)**
Inventor: **Heemels, Robertus Petrus Elisabeth**
**Hubertus**
**Kasteel Verduynenstraat 7**
**NL-6043 JS Roermond(NL)**

(74) Representative: **Hanneman, Henri W.A.M. et al**
**Océ-Nederland B.V. Patents and Information**
**Postbus 101**
**NL-5900 MA Venlo(NL)**

(54) Method for error correction of natural language sentence.

(57) A method whereby an error in a sentence composed in a natural language is corrected by means of a computer system. An error of this kind is detected by a spelling checker, whereupon a spelling corrector generates a number of replacement words having a slightly different spelling. The sentences obtained after substitution of the incorrect word by the replacement words are parsed by means of a parser and, if necessary, corrected grammatically. The correct sentences obtained as a result are displayed on a screen to give a choice which is to be made by the user.

Also relates to apparatus for application of the method.

FIG. 2

The invention relates to a method whereby an error in a sentence composed in a natural language is corrected by means of a computer system, and also to an apparatus suitable for performing a method of this kind.

A method of this kind is universally used in the form of a spelling checker with which a word detected as having a spelling error in a sentence is corrected. The spelling checker provides a number of alternative word forms which can be used as suggestions for correction, the degree of correction not being too great. One problem in this connection is the question as to how many alternative words can reasonably be offered to the user by the spelling checker. If there is a large number, the user will not readily see the correct word amongst the large number of alternative words, while if there are only a few, there is a considerable risk that the correct word will not be present. Moreover, a spelling checker does not detect grammatically incorrect words in a sentence in which each word of itself does occur according to the dictionary.

The object of the invention is to provide a solution to these problems. This solution is based on the idea that when the sentence containing the word for correction is parsed, it frequently appears that the word for correction must have a specific word category. Thus not every alternative word generated by a spelling corrector will give correct parsing. The user should only be offered those alternatives which result in an alternative sentence having entirely or approximately error-less parsing. This greatly limits the number of alternative words.

According to the invention, the method according to the preamble comprises the following successive steps:

a.1: checking the sentence for spelling errors by means of a spelling checker; and

a.2: parsing each supplied sentence by means of a parser;

after detection of a spelling error in a word in the sentence checked by the spelling checker the method also comprising the following steps prior to the step relating to parsing of the sentence:

b.1: generating of a list of alternative words - referred to as replacement words - having a slightly different spelling from the word detected as having a spelling error, by reference to a word memory containing word units lexicalised by verbal categories, and provided with a frequency factor determined by the frequency of use;

b.2: arranging these replacement words in sequence in accordance with the frequency factor;

b.3: offering the parser a number of replacement words arranged in sequence, by reference to which the parser will generate the associated parsing for the alternative sentences relating thereto.

The computer system for performing the method according to the preamble is adapted to perform the said steps.

The invention will now be explained with reference to the accompanying drawings wherein:

Figs. 1A - 1B are a flow diagram relating to the method whereby an error in a sentence composed in a natural language can be corrected in a computer system;

Fig. 2 shows a computer system adapted to perform the flow diagram shown in Figs. 1A-1B; and

Fig. 3 is a flow diagram relating to one advantageous embodiment of the method according to the invention.

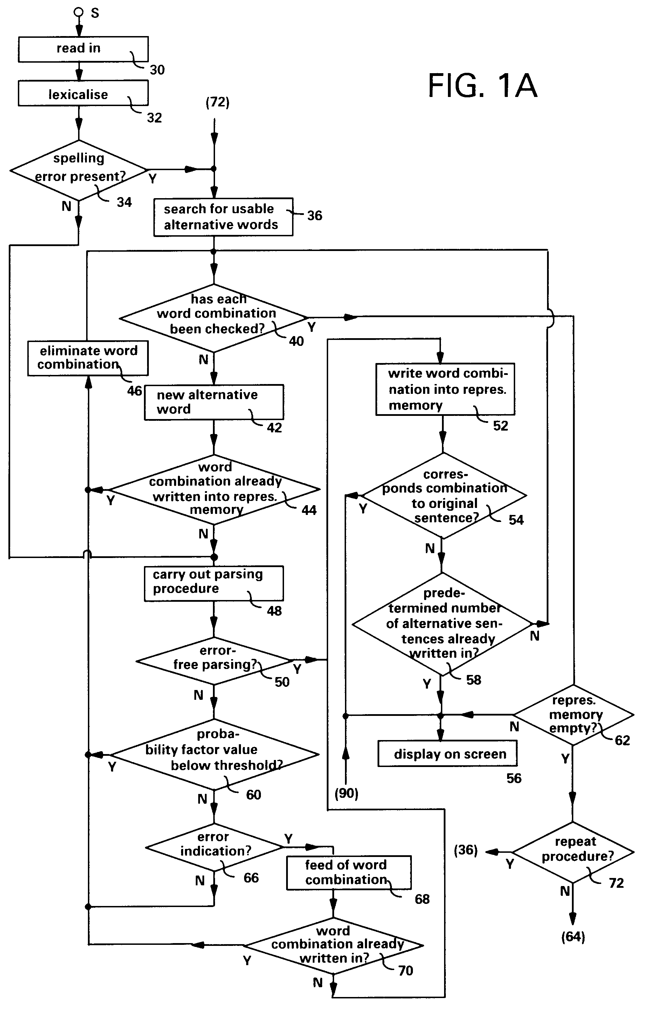

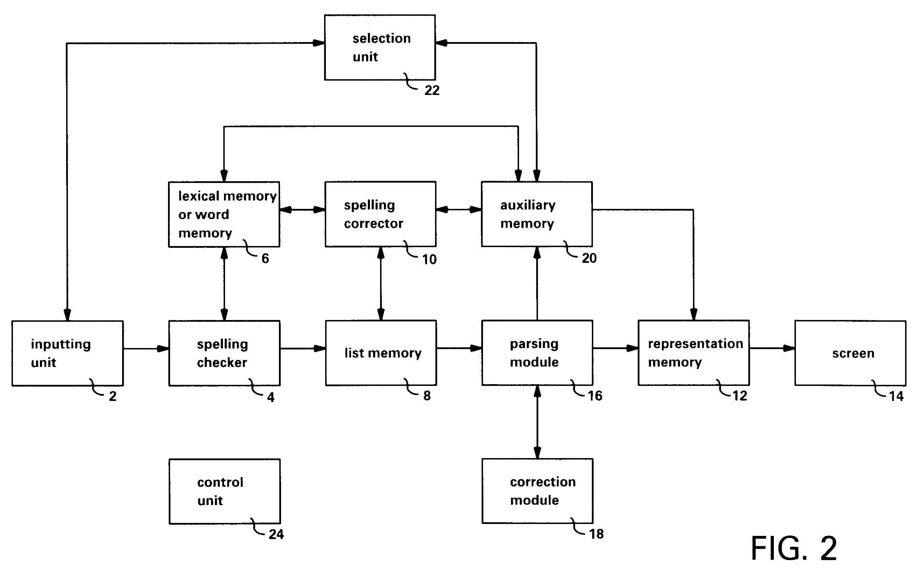

Figs. 1A - 1B are a flow diagram for performing the method whereby, in accordance with the invention, a linguistic error in a sentence composed in a natural language is corrected in a computer system. In explaining this flow diagram use will, where necessary, be made of Fig. 2, in which the units and modules in the computer system as required for proper performance of the said method are shown in block schematic form. In the flow diagram of Fig. 1A, the sentence to be checked for linguistic errors is read into the computer system by means of an inputting unit 2 (keyboard or reader) in step 30, and then lexicalised in step 32.

During lexicalisation of the sentence, each word is fed to a spelling checker 4 provided with a lexical memory or word memory 6. By reference to memory 6, the spelling checker 4 checks whether the word supplied exists and, if so, the word receives the associated word structure or structures concerning the verbal category or categories or word category or categories and application-directed categories from the lexical memory 6. The terms verbal category or word category and the application-directed category are described in the European patent application EP-A-0 361 570. All the word structures for each word are collected and written into a list memory 8. If a word has a spelling error and there are therefore no lexical data available, an error code is added to the word and written in in that form.

The said spelling checker 4 is of generally known type and the associated program can either be read into the computer system by means of the appropriate software or be introduced into the computer system by means of a modular unit. The next step 34 deals with the question whether there is at least one spelling error in the supplied sentence. If this question is answered in the affirmative (Y), a spelling corrector 10 in the computer system searches the word memory 6 in step 36 for usable alternative words, also known as replacement words, for each word which was given an error code and hence having a spelling error. The term usable alternative word for a word having a spelling error denotes any word having a spelling deviating slightly from the current word. As an example, if we take the incorrect Dutch word "ber", the following are possible alternative Dutch words: "bef" (=bands), "ben" (=am), "bek" (=mouth), "bel" (=ring/bell), "bep" (=Christian name), "bed" (=bed), "beo" (=name of bird), "bes" (=berry), "bar" (=bar), "ter"(=at the), "der" (=of the), "eer" (=honour), "ger" (=Christian name), "oer" (=bog-ore), "per" (=per), "ver" (=far), "berk" (=birch), "berg" (=mountain), "berm" (=verge), "ober" (=waiter), "boer" (=farmer), "bier" (=beer), "beur" (=lift up) and "beer" (=bear), while in addition, for each word, attention must be paid to differences as to word category and/or application-directed category. For example, the Dutch word "bel" has both the word category "verb" and the word category "noun" as a separate word structure.

Similarly, if the incorrect word "ber" is present in an English text, the following are possible alternative English words: 'bed", "bar", "beer", "bear", "her", "per", "bier", "be", "bee", "beg", "bere", "bet", "bey", "bur", "berg" and "berm".

Since a set of connected alternative words having diverse word structures can be very extensive, and the user is only interested in a restricted supply of alternative words for the purpose of making a choice therefrom, use is advantageously made of a word memory 6, in which each word is not only provided with the associated word category or word categories and the application-directed categories, but also with a specific "frequency factor" determined by the frequency of use of the word. The significance of the frequency factor of a word is that this factor has a higher value with increasing frequency of use of that word. Forming the alternative words with the associated word structures as selected in the word memory 6, in a sequence defined by the respective frequency factors, and storing them in a list memory 8 together with the word structures associated with the other words of the sentence, has the effect that the word combination with the words mostly used is in practice the first offered as an alternative for a word with a spelling error for a check on usability in replacing the incorrect word. Instead of performing steps 32 and 36 separately, it is also possible to do this simultaneously on detection of a spelling error. The program then goes on to step 40 where the question whether each word combination in the list memory 8 has already been checked is answered.

If the question is answered in the negative (N) in step 40, and there are therefore more word combinations relating to the sentence, with or without other word structures, then the program goes on to step 42.

In step 42, a new alternative word is repeatedly brought out of the list memory 8 in the sequence indicated, in combination with the other words of the sentence.

In the next step 44 the question is then put whether the word combination formed in this way has already been written into a representation memory 12 for the purpose of display on a screen 14. For example, it is possible that a word combination already treated and originally having another alternative word may finally have resulted, in a parsing and correction operation, in a corrected alternative sentence which is then identical to that of the word combination now being processed. Let it be assumed that the alternative Dutch words "wordt" and "word" are given for the incorrect word "wort", the word "wordt" being given a higher frequency factor than the word "word". On a check of the first combination formed "ik wordt ziek", it will finally yield the corrected sentence "ik word ziek". This sentence will then be written into the representation memory 12 for display on the screen 14. The word combination "ik word ziek" to be formed thereafter then no longer requires checking.

The same occurs in the wrong English sentence: "I fals ill", for which the English alternative words "falls" and "fall" are given as substitutes for the word "fals". The first combination "I falls ill" will yield the correct sentence "I fall ill". The combination "I fall ill" to be formed thereafter then no longer requires checking.

If the question is answered in the affirmative (Y) in step 44, the word combination formed is then eliminated in step 46, and the program returns to step 40 to enable a new word combination to be formed. If, however, the question is answered in the negative (N) in step 44, the word combination formed is then offered to a parsing module 16 in step 48. Use is advantageously made of a parsing module 16 adapted to parse those sentences in which the words have been lexicalised by reference to the word memory 6 used in this case, both the associated word category or word categories and application-directed categories being added to each word. A parsing module 16 operating in this manner is known from the said European patent application. Other parsing modules are also usable here, although a parsing module not suitable for parsing by reference to application-directed categories is often less efficient. Whenever a word combination is parsed in step 48, the question is put, in step 50, whether the parsing of the word combination offered as carried out by step 44 yielded an error-free parsing. If this question is answered in the affirmative (Y), the word combination is written into the representation memory 12 in the next step 52.

The program then goes to step 54, where the question is put whether the checked combination corresponds to the original sentence. If so (Y), the program goes on to step 56, where the word combination from the representation memory 12 is displayed on the screen 14. If the question is answered in the negative (N) in step 54, the program goes to step 58, where the question is answered whether a predetermined number of alternative sentences has already been written into the representation memory 12. If the question is answered in the affirmative (Y) in step 58, the program goes directly to step 56, in which there are displayed on the screen 14 the sentence or sentences (or just the associated alternative words and/or the corrected versions of those words), stored in the representation memory 12. If necessary, the user can make a choice therefrom as being the best alternative available. It is also possible to have the apparatus make a choice by searching for each word from a group of connected alternative words by means of a "find" action in the text, when the word in question or associated word stem has been used for the last time. The alternative word occurring as the most recent word in the text must then be regarded as the best choice.

If the question is answered in the negative (N) in step 58, and thus the representation memory 12 is only partly filled, the program goes back to step 40.

If the question is answered in the negative (N) in step 50, the program goes on to step 60, where the question is put whether the parsing carried out in step 48 has yielded a propability factor value below a predetermined threshold. If this question is answered in the affirmative (Y), the program goes on to step 46, where the word combination is eliminated and the program returns to step 40.

If, in step 60, the question is answered in the negative (N), the program goes to step 66, where the question is put whether parsing of the word combination has yielded an error indication. It is always possible that the parser not at all can process the supplied word combination in step 48, as is the case, for example, with the sentences "ik woord ziek" (English: "I word ill") or "ik bel zoek" (English: "I ring missing").

Similar example sentences in English may be: "I full all" and "it hall ill".

If the question is answered in the affirmative (Y) in step 66, the word combination is fed, in the next step 68, to a module for correcting grammatically incorrect sentences. A possible embodiment of such a module is described in the said European patent application. The said correction module makes use of data relating to application-directed categories. After the word combination has undergone correction in step 68, the question is put in step 70 whether the corrected word combination has already been written into the representation memory. If so (Y), the word combination is eliminated in the next step 46, and the program goes back to step 40. If this question is answered in the negative (N), the said sentence is fed in step 52 to the representation memory 12 for writing in. After a predetermined number of word combinations has been written into this memory 12, or if there are no more word structures in the list memory 8, the number of sentences or the associated alternative words or the associated corrected words are displayed on the screen in step 56.

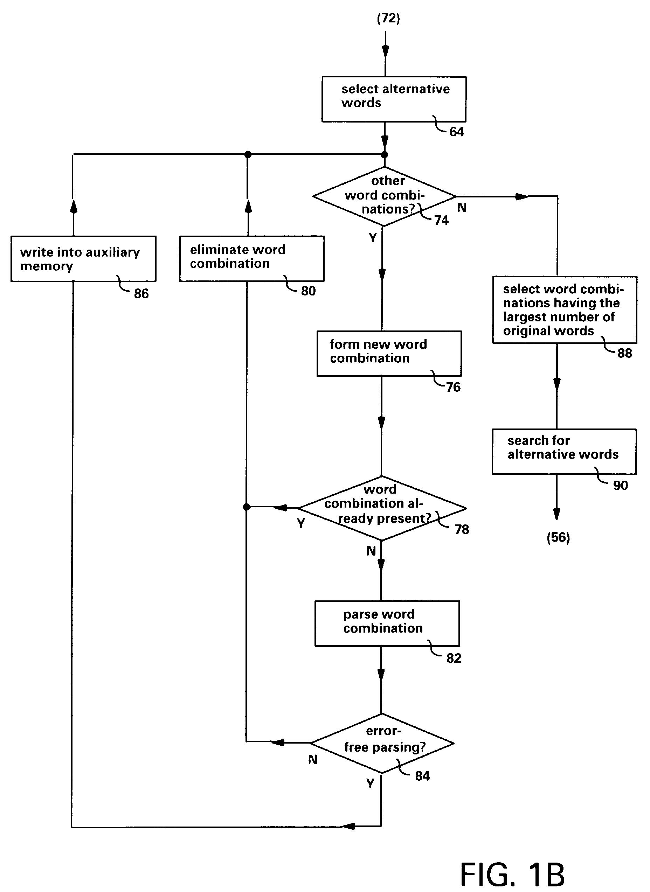

If the question is answered in the negative (N) in step 66 - and this means that we are dealing with a word combination for which the parser could not provide any parsing in step 48 - the program goes to step 40 via step 46. If the question is answered in the affirmative (Y) in step 40, and thus there is no new word combination to be generated in the list memory 8, the program goes on to step 62, where the question is put as to whether the representation memory 12 is empty. If this question is answered in the negative (N), the program goes to step 56, where the contents of the representation memory 12 are displayed on the screen 14. If the question is answered in the affirmative (Y) in step 62, step 72 follows, where the user is shown on the screen the question, for him to answer, whether he wishes to repeat the procedure followed, but with a lower threshold value. It is of course possible that for some word combinations the program will continue with step 66 after step 60 in the case of a lower threshold value. If the user keys in a positive answer (Y), the program returns to step 36 and the procedure is repeated but with a lower threshold value. If the user keys a negative answer (N), the program proceeds to step 64, as shown in Fig. 1B. It is also possible to omit step 72 completely, so that the program automatically goes to step 64. In step 64, the spelling corrector 10 (of step 36) selects, for each original word from that sentence (i.e. for each word without an error code), a number of alternative words having a slight spelling variation from the actual word to be replaced. It is, however, impracticable to make word combinations from all the possible combinations of all the word structures associated with those alternative words, and to check them for accuracy and, where necessary, correct them. This would not only require considerable computer processing time but also considerable storage capacity. On the other hand it is possible considerably to reduce the possible number of word combinations to be checked for grammar correction, by checking, for each word, whether there exist a number of alternative words having the same word category and the same application-directed categories. By taking just one representative from such a group of alternative words with, therefore, the same word category and the same application-directed categories, the effect achieved is that the number of word combinations involved for parsing checking is greatly reduced. On completion of this check the correct solutions should also take into account the disregarded solutions in searching for a suitable solution. To perform the foregoing operation, therefore, in step 64, in connection with each word in the sentence, there are selected from the associated set of word structures only those word structures which differ from one another in word category and/or application-directed category. By way of step 74 which will be discussed hereinafter, the program comes to step 76, where a new word combination is formed each time from the word structures thus selected, whereafter a check is made in step 78 whether such a word combination is already present in the representation memory 12. If this question is answered in the affirmative (Y), the program goes to step 80, where the word combination is eliminated. The program then returns to step 74. If, on the other hand, the question is answered in the negative (N) in step 78, the program goes to step 82, where the word combination is parsed by the parsing module 16. Each new word combination is then assessed in step 84 as to whether it yielded an error-free parsing. If this check for a word combination is answered in the affirmative (Y), this word combintion is written into an auxiliary memory 20 in step 86, whereupon the program returns to step 74. Step 74 asks whether other unused word combinations can be formed. If this question is answered in the affirmative (Y), the program goes on to step 76. If this question is answered in the negative (N), the program proceeds with step 88. If, in step 84, the question regarding suitable parsing of a word combination is answered in the negative (N), then the current word combination is eliminated in step 80 and the program returns to step 74. In step 88, by means of a selection unit 22, there are selected from the auxiliary memory 20 those word combinations having the largest number of original words of the word combination supplied in step 30. The other word combinations are eliminated.

In step 90, the spelling corrector 10 then successively searches the word memory 6 for alternative words in the same word category and application-directed categories for each word in each selected word combination. By means of these alternative words, word combinations are formed which are then written into the representation memory 12 and which, in the next step 56 (Fig. 1A), are displayed on the screen for the user to select. Since there is now the possibility that the number of word combinations to be displayed may be too extensive, a "find" action can be carried out to check when the associated words last appeared in the text. On this basis, the apparatus can itself make a choice from the combinations offered. If the representation memory 12 still contains no usable solution, that should be indicated on the screen. If, after the written-in sentence has been checked by the spelling checker 4 in step 32, the question as to the presence of a spelling error is answered in the negative (N) in step 34, the sentence may be grammatically incorrect. For this reason, a sentence of this kind is fed directly to the parsing module of step 48. In these conditions the list memory remains empty!

The units shown in Fig. 2 are controlled by a control unit 24 by reference to the program.

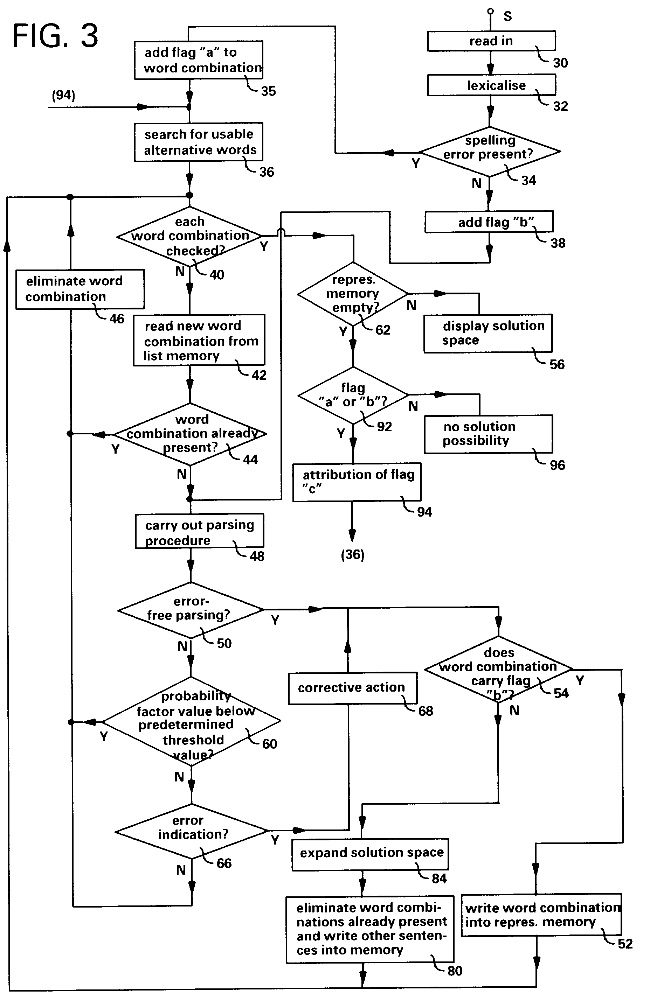

Fig. 3 is a flow diagram relating to one advantageous embodiment of the method according to the invention.

Program steps which are of corresponding significance in Figs. 1A - 1B and Fig. 3 will not be explained in detail if possible. In the flow diagram of Fig. 3, which starts at the starting point S, the sentence to be checked is read into the computer system by means of an inputting unit 2 in step 30 and is then lexicalised in step 32. The next step 34 processes the question whether there is at least one spelling error present in the supplied sentence. If this question is answered in the affirmative (Y), then in the next step 35 a flag "a" is added to the word combination to show that in running the program the word combination is recognised as being a word combination corresponding to the original sentence, and having one or more spelling errors, but having not yet undergone any correction process. The corrective action with regard to a sentence having the flag "a" should be restricted. This means that in the next step 36 a spelling corrector 10 searches a word memory 6 added thereto for usable alternative words only in respect of those words which have received an error code. Since a set of connected alternative words having different word structures may be very extensive, it is often a time-consuming operation to check each alternative word by means of a parsing procedure to see whether the associated sentence offers a correct solution in respect of grammatical rules. It is therefore advisable to apply some selection to the word combinations to be parsed. Since a parsing module 16 sees no difference between the sentences in which an incorrect word has repeatedly been replaced by alternative words which, however, correspond in verbal category and application-directed categories, all that is required for the parsing module is a sentence which is representative in terms of grammatical structure for the other sentences. Since, moreover, the alternative word which occurs most frequently in the use of the language generally gives the best chance of finally being selected by the user, the alternative word advantageously selected each time in step 36 is the one having the highest frequency factor. Of the alternative words selected in this way, the associated word structures together with the word structures belonging to the other words of the sentence are stored in a list memory 8. The next step 40 answers the question whether each word combination from the list memory 8 has been checked. If the question is answered in the negative (N), the program goes on to step 42, where a new word combination is read from the list memory 8. In step 44 then the question is whether the word combination thus formed is already present in the representation memory 12 as the result of a previously performed correction procedure. If this is the case (Y), that word combination is eliminated in step 46 and the program again goes to step 40. If this question is answered in the negative (N), a parsing procedure is then carried out on the word combination in step 48. A word combination having no spelling error and resulting in a negative answer (N) to the question in step 34, is also subjected to a parsing procedure in step 48 after the allocation of a flag "b" in step 38. Flag "b" in connection with a word combination indicates that this is a word combination belonging to the original sentence. In step 50 the question is then put whether the word combination resulted in an error-free parsing. In the event of a negative reply (N) to this question, the program goes to step 60, where the question is put whether the parsing performed in step 48 yielded a probability factor value below a predetermined threshold value. If this question is answered in the affirmative (Y), the program goes to step 46, where the current word combination is eliminated and the program then returns to step 40.

If the question is answered in the negative (N) in step 60, the program goes to step 66, where the question is answered whether the word combination was given an error indication during parsing. If this question is answered in the negative (N), the program also goes to step 46. If the last question is answered positively (Y), a corrective action by means of a correction module 18 for the word combination is logical, and is then performed in the next step 68. The program then goes to step 54.

If the question is answered in the affirmative (Y) in step 50, the program goes to step 54 to answer the question whether the word combination is carrying the flag "b". If so (Y), the word combination is then written into the representation memory 12 in step 52. If this is not the case (N), the program goes to step 84. The solution space should be expanded in this step, and this means that a search is made for other word structures but with the same word category and the same application-directed categories for the non-original word structures in the word combination; of the word combinations obtained as a result, those combinations which are already present in the representation memory 12 are eliminated in step 80, and the other sentences are written into that memory. The program then returns to step 40. If in step 40 positive answer (Y) is given to the question, the program goes to step 62 where the question is put whether the representation memory 12 is empty, and hence contains no solution.

If the answer to this question is negative (N), the solution space stored in the representation memory 12 is displayed on screen 14 in step 56.

If the question in step 62 is answered in the affirmative (Y) and thus there is no solution for the word combination under examination, the question is put in the next step 92 whether the word combination carries a flag "a" or flag "b". If this is the case (Y), there is still the possibility of searching for a series of alternative words for each word.

This means that each set of alternative words generated in response to an incorrectly spelled word, and hence in response to the presence of flag "a", remains treated as such. A set of alternative words is generated for each word of the other words in the sentence. A procedure of this kind must be recognisable to the spelling corrector 10 in step 36. For this purpose, a sentence in which a set of alternative words has to be generated for each word, should be provided with a flag "c", and this takes place in step 94. The program then goes to step 36. If, on the other hand, the question in step 92 is answered in the negative (N), there are no solution possibilities and this should be communicated to the user on the screen 14.

The program thus written will be explained by reference to a number of incorrect example sentences.

The Dutch example sentence "ik wordt ziek" (English: "I fals ill") is read in by inputting unit 2 in step 30. In step 32 the spelling checker 4 will not detect any spelling errors so that the program passes from step 34 to step 48 by the shortest route. The sentence is then parsed, and this yields an error indication and a lowering of the probability factor. The parser as described in EP-A-0 361 570 can advantageously be used for this purpose. The program passes via steps 50, 60 and 66 to step 68 where the sentence is corrected by a correction module. Here again, it is advantageous to use the correction module as described in the said European patent application. The program then comes to step 52, where the sentence is written into the representation memory 12. The program then goes on to step 56, where the corrected sentence is displayed on the screen.

The second Dutch example sentence "ik wort ziek" (English: "I fals ill") is also read in by the inputting unit in step 30. The spelling checker 4 will detect the incorrectly spelled word "wort" in the next step 32, so that the program passes to step 36 via step 34, and here it selects a number of alternative Dutch words from the word memory 6, e.g. "wordt" (=falls), "word" (=fall), "kort" (=short), "mort" (=grumbles), "port (=pokes)" for writing into the list memory 8. The program passes via step 40 to step 42 where the first alternative sentence "ik wordt ziek" (= I falls ill) is formed. This sentence is then parsed in step 48. As a result of the grammatical error in the sentence in respect of the word "wordt" (=falls), the sentence is given an error indication and a probability factor less than 1. The program passes via step 50 to step 60. If the allocated probability factor is lower than the threshold value, the program goes to step 46 where the sentence is eliminated. The program then returns to step 40 to form the second alternative sentence. If the probability factor is greater than the threshold value, the program passes via step 66 to step 68, where the sentence is corrected to "ik word ziek" (= "I fall ill") and is then written into the representation memory 12 in step 52. The program then returns to step 40 and then in step 42 the second alternative sentence "ik word ziek" (= "I fall ill") is formed. In step 44, however, it is established that this sentence is already written into the representation memory, so that the second alternative sentence is eliminated and the program returns to step 40. In step 42 the third alternative sentence "ik kort ziek" (="I short ill") is then formed. This alternative sentence cannot be parsed by the parser in step 48 and is not given any error indication, but it is given an adjusted probability factor, which is lower than the current threshold value.

The program passes via step 50 to step 60, and then to step 46 where the third alternative sentence is eliminated. The program then returns to step 40 to form the fourth alternative sentence "ik mort ziek" (= "I grumbles ill"). This alternative sentence, and also the alternative sentence "ik port ziek" (= "I pokes ill") to be formed thereon, undergo the same fate as the sentence "ik kort ziek" (= "I short ill"). After it has been established in step 40 that there are no alternative word combinations in the list memory 8, the program goes to step 56 via mode Y.

A similar English example sentence will be: "I fals ill", for which the program selects a number of alternative English words, e.g. "falls", "fall", ˜fats" and "pals".

In the third Dutch example sentence "ik woord ziek" (= "I word ill"), which will now be explained with reference to Figs. 1A - 1B, no spelling error is detected and the program then goes from step 34 to step 48. The parser cannot parse the sentence, so that the program passes via steps 50, 60, 66, 46, 40 and 62 to step 64. The spelling corrector 10 now selects a number of alternative words for each word.

The word "ik" (=I), gives the following alternative words for example:
"uk" (=little mite), "fik" (=fire), "pik" (=pitch), "in" (=in), "lik"(=lick), "bik" (=chip), "eik" (=oak), "tik" (=touch), "sik" (=goat), "hik" (=hiccup).

The word "woord" (=word) provides the following alternative words:
"word" (=fall), "woerd" (=drake), "moord" (=murder), "noord" (=north), "koord" (=cord), "boord" (=border).

And the word "ziek" (=ill) yields the following alternative words:
"zoek" (=missing), "riek" (=threepronged fork), "kiek" (=snapshot), "ziet" (=sees), "giek" (=gig), "piek" (=peak), "wiek" (=wing).

In this connection only representatives of words having different word categories and/or application-directed categories are selected.

Apart from the word "ik" (="I") ( personal pronoun, first person singular), there are also selected: "uk" (="little mite") (noun, masculine, singular), "in" (="in") (preposition), and "bik" (="chip") (verb, first person singular). Apart from the word "woord" (="word") (noun, neuter, singular), there are also selected: "wordt" (="falls") (verb, second and third persons singular) and "woerd" (="drake") (noun, masculine, singular). Apart from the word "ziek" (="ill") (adjective; noun predicate), there are also selected: "zoek" (= "missing") (verb, first person singular; adjective; noun predicate), and "riek" (="threeponged fork") (noun, masculine, singular; verb, first person singular). In step 76 a new combination of words is selected each time and then offered to the parser in step 82 as a sentence for parsing. It will be found on each occasion that the parser does not yield an error-free parsing of the sentence offered. That sentence will accordingly be eliminated in step 80, whereupon the program returns to step 74 for the selection of a subsequent combination of words in step 76, which is then parsed as a sentence in step 82. However, the combination "ik word ziek" (= "I fall ill") to be formed in step 76 will yield a suitable parsing, so that the program at step 84 passes to step 86. The sentence is now written into the auxiliary memory 20. The program then again goes on to step 74. If step 74 shows that no new combination of words can be formed, the program continues to step 88. Here the sentences having the largest number of words in common with the original sentence are selected. Since we are only concerned here with one sentence, that sentence remains selected. Subsequently, in step 90, in connection with each non-original word, there are collected from this sentence those alternative words which have the same word category and application-directed category. It will be found that no other sentence is satisfactory apart from the sentence "ik word ziek" ( = "I fall ill").

A similar incorrect English sentene as the last Dutch example sentence may be: "It fail ill".

The word "It" gives the following alternative words for example: "I", "If", "In", "Its" and "Is". The word "fail" provides the following alternative words: "fall", "fails", "hail", "bail", "jail", "mail", "nail", "pail", "rail", "sail", "tail", "wail" and "foil". And the word "ill" yields the following alternative words: "all", "fill", "hill", "kill", "mill", "pill", "rill", "sill", "till" and "will".

Apart from the word "it" (pronoun, sing 3, nominative, personal), there are also selected: "I" (noun, sing 3, countable; pronoun, not relative, not interrogative), "if" (conjunction), "in" (noun, countable, sing 3; preposition; particle (adverbial), "its" (adjective, normal, adverb, not inflected) and "is' (verb, sing 3, auxilliary, present, intransitive).

Apart from the word "fail" (verb, infinitive, main, present, plu 3, plu 2, plu 1, sing 2, sing 1, intransitive, transitive; noun, sing 3, uncountable) there are also selected: "fall" (verb, main, infinitive, present, plu 3, plu 2, plu 1, sing 2, sing 1, intransitive; noun, countable, sing 3), "fails" (verb, sing 3, main, present, intransitive, transitive), "hail" (verb, infinitive, main, present, plu 3, plu 2, plu 1, sing 2, sing 1, intransitive, transitive; noun, sing 3, uncountable, countable), "jail" (verb, main, infinitive, present, plu 3, plu 2, plu 1, sing 2, sing 1, transitive; noun, uncountable, countable, sing 3), "nail" (verb, main, infinitive, present, plu 3, plu 2, plu 1, sing 2, sing 1, transitive; noun, countable, sing 3), "pail" (noun, countable, sing 3) and "rail" (verb, infinitive, main, present, plu 3, plu 2, plu 1, sing 2, sing 1, intransitive, transitive; noun, countable, sing 3).

Apart from the word "ill" (noun, uncountable, countable, sing 3; adjective, normal, adverb, not inflected; adverb, non relative, not interrogative) there are also selected: "all" (noun, sing 3, countable; adjective, quantifier, normal, adverb, not inflected; adverb, not relative, not interrogative; pronoun, not relative, not interrogative; prefix), "fill" (verb, infinitive, main, present, plu 3, plu 2, plu 1, sing 2, sing 1, intransitive, transitive; noun, uncountable, countable, sing 3), "kill" (verb, infinitive, main, present, plu 3, plu 2, plu 1, sing 2, sing 1, intransitive, transitive; noun, sing 3, countable), "hill" (noun, countable, sing 3), "pill" (noun, countable, sing 3), "till" (verb, main, infinitive, present, plu 3, plu 2, plu 1, sing 2, sing 1, transitive; noun, countable, sing 3; preposition; conjunction) and "will" (verb, infinitive, modal, present, plu 3, plu 2, plu 1, sing 3, sing 2, sing 1; noun, uncountable, countable, sing 3).

It will be found that no other sentence is satisfactory apart from the sentence "I fall ill". It may be remarked that there is no need to involve the complete list of expressions as to the categories and the features in the program steps. For it is more skilful to execute the program by means of pointers which relate to the categories and features. In this description the complete list of expressions is only used to get a clear explication of the invention.

In the above example only words differing one letter with the original word are used. However, it is also possible to involve words in which two characters are interchanged in comparison with an original word and words which have a sound-relationship with an original word (such as "hail" and "hale").

## Claims

1. A method whereby an error in a sentence composed in a natural language is corrected by means of a computer system, characterised in that the method comprises the following successive steps:

    a.1: checking the sentence for spelling errors by means of a spelling checker; and

    a.2: parsing each supplied sentence by means of a parser; after detection of a spelling error in a word in the sentence checked by the spelling checker the method also comprising the following steps prior to the step relating to parsing of the sentence:

    b.1: generating a list of alternative words - referred to as replacement words - having a slightly different spelling from the word detected as having a spelling error, by reference to a word memory containing word units lexicalised by verbal categories, and provided with a frequency factor determined by the frequency of use;

    b.2: arranging these replacement words in sequence in accordance with the frequency factor;

    b.3: offering the parser a number of replacement words arranged in sequence, by reference to which the parser will generate the associated parsing for the alternative sentences relating thereto.

2. A method whereby an error in a sentence composed in natural language is corrected by means of a computer system, the said sentence previously being checked for spelling errors by a spelling checker, and in the event of a word being detected as having a spelling error said word is corrected in accordance with the method according to claim 1, characterised in that in the event of the presence of a grammatically incorrect sentence after correction of the word detected as having a spelling error the method comprises the following steps to be performed:

a. generating, for each word, of a list of alternative words - referred to as replacement words - having a slightly different spelling from said word;

b. forming of alternative sentences using generated replacement words for one or more words in the sentence to be replaced;

c. successive parsing of the alternative sentences formed; and

d. selecting and displaying of the alternative sentence having the best parsing.

3. A method according to claim 2, characterised in that parsing of an alternative sentence takes place only if said alternative sentence contains a different combination of word categories in comparison with the combinations of word categories of already parsed sentences

4. A method according to claim 3, the parser being adapted to parse a sentence while checking the application-directed categories associated with the words, characterised in that a parsed sentence bearing an error indication is corrected by a correction module.

5. Apparatus suitable for correcting an error in a sentence composed in a natural language, characterised in that the apparatus is provided with:

a. a spelling checker for checking a sentence for spelling errors;

b. means for generating a list of alternative words - referred to as replacement words - having a slightly different spelling from the word detected as having a spelling error, by reference to a word memory containing word units lexicalised by verbal categories, and provided with a frequency factor determined by the frequency of use;

c. a parser for parsing a supplied sentence in which a word detected as a spelling error is replaced by a replacement word.

6. Apparatus according to claim 5, characterised in that the means for generating a list of alternative words - referred to as replacement words - are adapted to select from the replacement words those replacement words which differ from one another in respect of verbal category or application-directed category.

7. Apparatus according to claim 6, characterised in that the means for generating a list of alternative words - referred to as replacement words - are also adapted to select the replacement word having the highest frequency factor from those replacement words having the same verbal category and application-directed category.

# EP 0 513 918 A1

## FIG. 1A

S

read in — 30

lexicalise — 32

(72)

spelling error present? — 34
- N
- Y

search for usable alternative words — 36

has each word combination been checked? — 40
- N
- Y

eliminate word combination — 46

new alternative word — 42

write word combination into repres. memory — 52

word combination already written into repres. memory — 44
- Y
- N

corresponds combination to original sentence? — 54
- Y
- N

carry out parsing procedure — 48

predetermined number of alternative sentences already written in? — 58
- N
- Y

error-free parsing? — 50
- N
- Y

probability factor value below threshold? — 60
- Y
- N

display on screen — 56

repres. memory empty? — 62
- N
- Y

(90)

error indication? — 66
- Y
- N

feed of word combination — 68

repeat procedure? — 72
- Y (36)
- N

(36)

word combination already written in? — 70
- Y
- N

(64)

10

(72)

↓

```
┌──────────────────┐
│ select alternative│
│ words            │
└──────────────────┘
        └─64
```

other
word combi-
nations?  ⟩ 74   N →

Y
↓

┌──────────────────┐
│ form new word    │
│ combination      │
└──────────────────┘
        └─76
↓

word
combination al-
ready present?  ⟩ 78

Y →

N
↓

┌──────────────────┐
│ parse word       │
│ combination      │
└──────────────────┘
        └─82
↓

error-
free parsing?  ⟩ 84

N

Y
↓

┌──────────────────┐
│ write into auxiliary│
│ memory           │
└──────────────────┘
        └─86

┌──────────────────┐
│ eliminate word   │
│ combination      │
└──────────────────┘
        └─80

┌──────────────────────┐
│ select word combi-   │
│ nations having the   │
│ largest number of    │
│ original words       │
└──────────────────────┘
        └─88
↓

┌──────────────────┐
│ search for       │
│ alternative words│
└──────────────────┘
        └─90
↓

(56)

# FIG. 1B

FIG. 2

# FIG. 3

add flag "a" to
word combination
— 35

(94)

search for usable
alternative words
— 36

eliminate word
combination
— 46

each
word combination
checked?
N — 40   Y

read new word
combination from
list memory
— 42

word
combination already
present?
Y   N — 44

carry out parsing
procedure
— 48

error-
free parsing?
N — 50   Y

probability
factor value below
predetermined
threshold
value?
Y   N — 60

error
indication?
N — 66   Y

S

read in
— 30

lexicalise
— 32

spelling
error present?
Y   N — 34

add flag "b"
— 38

repres.
memory
empty?
Y   N — 62

display solution
space
— 56

flag
"a" or "b"?
Y   N — 92

no solution
possibility
— 96

attribution of flag
"c"
— 94

(36)

does
word combination
carry flag
"b"?   Y
N — 54

corrective action
— 68

expand solution space
— 84

eliminate word combi-
nations already present
and write other senten-
ces into memory
— 80

write word combination
into repres. memory
— 52

13

**EUROPEAN SEARCH REPORT**

Application Number

EP    92 20 1331

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN<br>vol. 12, no. 151(p-699) 11 MAY 1988<br>&JP-A-62267872(RICOH CO. LTD) 20 NOVEMBER 1987<br>* whole document *<br>--- | 1,5 | G06F15/20 |
| A | MINI MICRO SYSTEMS<br>vol. 17, no. 2, February 1984, BOSTON, US<br>pages 277 - 288;<br>R.R. FRIEDMAN: 'Word-processing software for minicomputers rivals capability of turnkey systems'<br>* page 282, right column, line 38 - page 288, right column, line 19 *<br>--- | 1-5 | |
| A | EP-A-0 327 266 (A.T.+T. CO.) 9 August 1989<br>* page 3, lines 1-30; page 4, line 24 - page 5, line 50 *<br>----- | 1,5 | |
| | | | TECHNICAL FIELDS SEARCHED (Int. Cl.5) |
| | | | G06F |

The present search report has been drawn up for all claims

| Place of search | Date of completion of the search | Examiner |
|---|---|---|
| THE HAGUE | 14 JULY 1992 | WEINBERG L.F. |